(19) Europäisches Patentamt
European Patent Office
Office européen des brevets

(11) **EP 1 674 485 B1**

(12) **EUROPÄISCHE PATENTSCHRIFT**

(45) Veröffentlichungstag und Bekanntmachung des Hinweises auf die Patenterteilung:
**09.03.2011  Patentblatt 2011/10**

(51) Int Cl.:
***C08F 8/12*** *(2006.01)*

(21) Anmeldenummer: **05028229.2**

(22) Anmeldetag: **22.12.2005**

(54) **Verfahren zur Herstellung von Polyvinylalkohol-Polyether-Pfropfcopolymeren durch Extrusion**

Process for preparing  polyvinylalcohol-polyether graft-copolymers by extrusion

Procédé pour la préparation de copolymères greffés à base d' alcool polyvinylique et polyether par extrusion

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **23.12.2004  DE 102004062200**

(43) Veröffentlichungstag der Anmeldung:
**28.06.2006  Patentblatt 2006/26**

(73) Patentinhaber: **BASF SE**
**67056 Ludwigshafen (DE)**

(72) Erfinder:
• **Güntherberg, Norbert**
**67346 Speyer (DE)**
• **Seebeck, Tanja**
**64625 Bensheim (DE)**
• **Lange, Ronald Frans Maria**
**67061 Ludwigshafen (DE)**

(56) Entgegenhaltungen:
**GB-A- 848 787          US-A- 3 072 624**
**US-A- 4 338 405          US-A- 5 599 877**
**US-B1- 6 579 953**

**Beschreibung**

Die vorliegende Erfindung betrifft ein Verfahren zur Herstellung von Pfropfcopolymeren, die von Vinylalkohol abgeleitete Wiederholungseinheiten und Polyethergruppen aufweisen, durch Reaktivextrusion von entsprechenden Pfropfcopolymeren auf Basis von Estern des Vinylalkohols in Gegenwart von Wasser und/oder mindestens einem $C_1$-$C_6$-Alkanol und einer Base. Weiterhin betrifft die Erfindung die Verwendung der nach diesem Verfahren erhältlichen Pfropfcopolymere.

Polyvinylalkohole bieten breite Anwendungsmöglichkeiten, z. B. als Schutzkolloide, Emulgatoren, Metallschutzüberzüge, Verdickungsmittel und zur Herstellung von Salben, Emulsionen und wasserlöslichen Verpackungsfolien. Für spezielle Anwendungszwecke oder Verarbeitungsmethoden werden die Eigenschaften von Polyvinylalkoholen vorteilhafterweise durch Kombination mit anderen Polymeren eingestellt, insbesondere in Form von Vinylalkohol in einpolymerisierter Form enthaltenden Blockcopolymeren und speziell Pfropfcopolymeren. So beschreibt beispielsweise die WO 03/070224 Filmüberzüge für feste Substrate, die wenigstens ein Polyvinylalkohol-Polyether-Pfropfcopolymer in Kombination mit mindestens einer Komponente mit Hydroxy-, Amid-, oder Esterfunktionen enthalten.

Da die Konzentration von monomerem Vinylalkohol im Tautomeren-Gleichgewicht mit Acetaldehyd zu gering ist, können Polyvinylalkohole nicht direkt durch Polymerisation des Monomers hergestellt werden. Polyvinylalkohole werden daher vor allem aus Polyvinylestern, speziell Polyvinylacetaten, über polymeranaloge Reaktionen wie Hydrolyse und durch alkalisch katalysierte Umesterung mit Alkoholen hergestellt. Der dabei erzielte Hydrolysegrad und somit der Restgehalt an Acetyl-Gruppen, bestimmt maßgeblich die Eigenschaften des Produkts, insbesondere das Löslichkeitsverhalten. Gängige Methoden zur Beeinflussung der Wasserlöslichkeit bestehen in einer Nachbehandlung mit Aldehyden, Komplexierung mit Ni- oder Cu-Salzen oder Behandlung mit Dichromaten, Borsäure oder Borax.

Die Eigenschaften von Blockcopolymeren mit Polyvinylalkohol-Einheiten und Einheiten, die sich von anderen Polymeren, wie beispielsweise Polyethern, ableiten sind naturgemäß von der Art der Polymerblöcke und deren Verknüpfung abhängig. Insbesondere kann sowohl das Mengenverhältnis der Polymerblöcke zueinander als auch der Hydrolysegrad der enthaltenen Polyvinylalkoholblöcke variiert werden. In diesem Zusammenhang sind beispielsweise Polyalkylenglykol-Polyvinylalkohol-Pfropfcopolymere zu nennen, bei denen sich in Abhängigkeit des erzielten Hydrolysegrades eine sehr gute Wasserlöslichkeit einstellen lässt. Aus diesem Grund stellen solche Polymere geeignete Kandidaten für wasserlösliche Überzüge oder Verpackungsmaterialien, die im Allgemeinen durch thermoplastische Verfahren hergestellt werden, dar.

Zu den an solche Überzüge und Verpackungsmaterialien, insbesondere Folien, zu stellenden Anforderungen gehört neben der gewünschten Wasserlöslichkeit auch der Grad an Klebrigkeit des Polymerprodukts und bei Folien deren Siegelfähigkeit. Beide Eigenschaften werden durch den Hydrolysegrad der Polyvinylalkoholblöcke in den Block-Copolymeren beeinflusst. Allgemein gilt dabei, dass mit höherem Hydrolysegrad die Wasserlöslichkeit des Polymers zunimmt und die Klebrigkeit abnimmt. Eine optimale Siegelfähigkeit zeichnet sich dadurch aus, dass man eine gute Schweißnaht ohne Brüchigkeit oder Klebrigkeit der Folie erhalten kann.

Die Umsetzung von Polyvinylacetaten mit Alkanolen in einer basischen Alkohollösung, ist beispielsweise in Ullmann's Encyclopedia of Industrial Chemistry, 5. Auflage auf CD-ROM, polyvinyl compounds, others - poly(vinyl alcohol), 1.2. production, beschrieben. In Verbindung mit der üblichen Aufarbeitung durch Wasserdampfdestillation, Sprühtrocknung und Granulierung ist dieses herkömmliche Verfahren sehr aufwendig. So muss zur Entfernung organischer Lösemittel und der bei der Hydrolyse erhaltenen Nebenprodukte das Polymer im Allgemeinen zunächst durch Zugabe von Wasser in Lösung gebracht bzw. das bei der Reaktion erhaltene Polymergel verdünnt werden. (Eine starke Erhöhung der Viskosität während der Reaktion und eine Gelbildung resultieren daraus, dass in der Regel nur die Edukte, nicht aber die Produkte im verwendeten Lösungsmittel, z. B. Methanol, löslich sind.) Anschließend werden die unerwünschten Komponenten durch Wasserdampfdestillation entfernt. Um die erhaltenen Polymere in eine thermoplastisch verarbeitbare Form zu überführen, muss die Polymerlösung getrocknet werden, z. B. durch Sprühtrocknung. Diese Vorgehensweise ist wirtschaftlich unvorteilhaft. Es besteht daher ein Bedürfnis, die zur Herstellung von Vinylalkohol in einpolymerisierter Form enthaltenden Pfropfcopolymeren erforderlichen aufwendigen Verfahrensschritte zu minimieren.

Die DE-AS-1 081 229 und die DE-AS-1 094 457 beschreiben die alkalische und saure Verseifung bzw. Umesterung von Pfropfpolymerisaten von Vinylestern auf Polyalkylenglycole. Zur alkalischen Alkoholyse dient beispielsweise in Methanol gelöstes Natrium- oder Kaliumhydroxid.

Die WO 00/18375 beschreibt die Verwendung von Polymerisaten, die durch Polymerisation von mindestens einem Vinylester in Gegenwart wenigstens eines Polyethers erhältlich sind, und von deren Verseifungsprodukten als Überzugsmittel, Bindemittel und/oder filmbildenden Hilfsstoff in pharmazeutischen Darreichungsformen. Es ist zwar beschrieben, die fertigen Polymere zur Herstellung von Arzneistoffen zu extrudieren und kalandrieren, eine Reaktivextrusion zur Durchführung der Verseifungsreaktion ist jedoch nicht offenbart.

Die WO 95/02616 beschreibt ein Verfahren zur Umesterung eines Polymers mit Polyethylen-Rückgrat und Estergruppen in den Seitenketten durch Reaktivextrusion. Eine Alkoholyse erfolgt bei den beschriebenen Reaktionsbedingungen nicht.

Die US 3,072,624 (oder GB 848 787) beschreibt ein Verfahren zur Herstellung von Polyvinylalkohol durch Verseifung von Polyvinylacetat, wobei man das noch fließfähige Reaktionsgemisch vertikal durch einen Mischer fließen lässt und anschließend zur weiteren Verseifung in einen Doppelschneckenextruder überführt.

US A 5599877 beschreibt die Verseifung in einen Extruder zur Bildung von Polymeren mit Metallcarboxylatgruppen.

Die EP-A-0054716 beschreibt ein kontinuierliches Verfahren zur partiellen Alkoholyse von Polyvinylacetathomo- oder -copolymeren, bei dem eine methanolische Lösung des Polymers und eine methanolische Lösung eines basischen Katalysators in einer Mischzone vorgemischt werden und das erhaltene Gemisch einer Reaktionszone zugeführt wird, wobei Mischzone und Reaktionszone aus einer Kombination eines statischen Mischers mit einem Zwillings-Rotor-Mischers oder Mischextruder gebildet werden. Als Comonomere werden (Meth-)Acrylsäure, Methyl(meth)acrylat, Maleinsäuremono- und -diester, Dimethylaminoethylvinylether und $\alpha$-Olefine mit 2 bis 18 Kohlenstoffatomen genannt. Über die Struktur der eingesetzten Copolymere wird nichts ausgesagt, Pfropfcopolymere werden nicht erwähnt.

Der vorliegenden Erfindung liegt die Aufgabe zugrunde, ein einfach durchzuführendes Verfahren zur Herstellung von Vinylalkohol in einpolymerisierter Form enthaltenden Pfropfcopolymeren bereitzustellen, das ohne aufwendige Verfahrensschritte, insbesondere ohne Dampfdestillation bzw. Sprühtrocknung durchführbar ist. Bei dem Verfahren sollte das Produkt in einer Form erhalten werden, die einen vorteilhaften Einsatz in Spritzguss- oder Folienextrusions-Verfahren ermöglicht. Das erfindungsgemäße Verfahren sollte sich insbesondere dadurch auszeichnen, dass der Hydrolysegrad des erhaltenen Polymerprodukts zuverlässig eingestellt werden kann.

Die gestellte Aufgabe wird erfindungsgemäß gelöst durch ein Verfahren gemäß Ansprüche 1-13 zur Herstellung von Pfropfcopolymeren P2), die von Vinylalkohol abgeleitete Wiederholungseinheiten und Polyethergruppen aufweisen, durch Umsetzung von Pfropfcopolymeren P1), die von Estern des Vinylalkohols abgeleitete Wiederholungseinheiten und Polyethergruppen aufweisen, mit Wasser und/oder mindestens einem $C_1$-$C_6$-Alkanol in Gegenwart eines Katalysators, das dadurch gekennzeichnet ist, dass die Umsetzung in einem Extruder erfolgt.

Das erfindungsgemäße Verfahren ermöglicht es in besonders vorteilhafter Weise die vormals in separaten Apparaturen durchgeführten Verfahrensschritte: Alkoholyse, Wasserdampfdestillation und Sprühtrocknung in einer einzigen Apparatur, dem Extruder, durchzuführen. Zusätzlich kann das erhaltene Extrudat in einfacher Weise einer Granulierung unterzogen werden, wobei sich die so erhalten Granulate gut für die Weiterverarbeitung durch Spritzgießen oder zur Herstellung von Folien eignen. So wurde gefunden, dass sich die nach bekannten Verfahren erhaltenen Polymerpulver von Pfropfcopolymeren mit Vinylalkohol-Wiederholungseinheiten und Polyethergruppen nur schlecht als Einsatzmaterial für Spritzguss- oder Folienextrusions-Verfahren eignen, da die Beschickung der Werkzeuge mit solchen Pulvern nur unzureichend und auf nichteinheitliche Weise auszuführen ist. Diese Nachteile können durch den Einsatz von nach dem erfindungsgemäßen Verfahren erhaltenen granulierten Produkten überwunden werden.

Weiterhin ermöglicht das erfindungsgemäße Verfahren den Einsatz von Lösungen des Pfropfcopolymers P1) mit deutlich höherem Feststoffgehalt als die aus dem Stand der Technik bekannten Verfahren, da sich die Erhöhung der Viskosität während der Reaktion und die gegebenenfalls damit verbundene Gelbildung unter den Scher- und Föderbedingungen eines Extruder weniger stark auswirkt.

Im Rahmen der vorliegenden Erfindung umfasst der Ausdruck Alkyl geradkettige und verzweigte Alkylgruppen. Geeignete kurzkettige Alkylgruppen sind z. B. geradkettige oder verzweigte $C_1$-$C_7$-Alkyl-, bevorzugt $C_1$-$C_6$-Alkyl- und besonders bevorzugt $C_1$-$C_4$-Alkylgruppen. Dazu zählen insbesondere Methyl, Ethyl, Propyl, Isopropyl, n-Butyl, 2-Butyl, sec.-Butyl, tert.-Butyl, n-Pentyl, 2-Pentyl, 2-Methylbutyl, 3-Methylbutyl, 1,2-Dimethylpropyl, 1,1-Dimethylpropyl, 2,2-Dimethylpropyl, 1-Ethylpropyl, n-Hexyl, 2-Hexyl, 2-Methylpentyl, 3-Methylpentyl, 4-Methylpentyl, 1,2-Dimethylbutyl, 1,3-Dimethylbutyl, 2,3-Dimethylbutyl, 1,1-Dimethylbutyl, 2,2-Dimethylbutyl, 3,3-Dimethylbutyl, 1,1,2-Trimethylpropyl, 1,2,2-Trimethylpropyl, 1-Ethylbutyl, 2-Ethylbutyl, 1-Ethyl- 2-methylpropyl, n-Heptyl, 2-Heptyl, 3-Heptyl, 2-Ethylpentyl, 1-Propylbutyl, Octyl.

Geeignete längerkettige $C_8$-$C_{30}$-Alkyl- bzw. $C_8$-$C_{30}$-Alkenylgruppen sind geradkettige und verzweigte Alkyl- bzw. Alkenylgruppen. Bevorzugt handelt es sich dabei um überwiegend lineare Alkylreste, wie sie auch in natürlichen oder synthetischen Fettsäuren und Fettalkoholen sowie Oxoalkoholen vorkommen, die gegebenenfalls zusätzlich einfach, zweifach oder mehrfach ungesättigt sein können. Dazu zählen z. B. n-Hexyl(en), n-Heptyl(en), n-Octyl(en), n-Nonyl(en), n-Decyl(en), n-Undecyl(en), n-Dodecyl(en), n-Tridecyl(en), n-Tetradecyl(en), n-Pentadecyl(en), n-Hexadecyl (en), n-Heptadecyl(en), n-Octadecyl(en), n-Nonadecyl(en).

Cycloalkyl steht vorzugsweise für $C_5$-$C_8$-Cycloalkyl, wie Cyclopentyl, Cyclohexyl, Cycloheptyl oder Cyclooctyl.

Der Ausdruck Heterocycloatkyl im Sinne der vorliegenden Erfindung umfasst gesättigte, cycloaliphatische Gruppen mit im Allgemeinen 4 bis 7, vorzugsweise 5 oder 6 Ringatomen, in denen 1 oder 2 der Ringkohlenstoffatome durch Heteroatome, ausgewählt aus den Elementen Sauerstoff, Stickstoff und Schwefel, ersetzt sind und die gegebenenfalls substituiert sein können, wobei im Falle einer Substitution, diese heterocycloaliphatischen Gruppen 1, 2 oder 3, vorzugsweise 1 oder 2, besonders bevorzugt 1 Substituenten, ausgewählt aus Alkyl, Aryl, COOR$^a$, COO$^-$M$^+$ und NE$^1$E$^2$, bevorzugt Alkyl, tragen können. Beispielhaft für solche heterocycloaliphatischen Gruppen seien Pyrrolidinyl, Piperidinyl, 2,2,6,6-Tetramethyl-piperidinyl, lmidazolidinyl, Pyrazolidinyl, Oxazolidinyl, Morpholidinyl, Thiazolidinyl, Isothiazolidinyl, Isoxazolidinyl, Piperazinyl-, Tetrahydrothiophenyl, Tetrahydrofuranyl, Tetrahydropyranyl, Dioxanyl genannt.

Aryl umfasst unsubstituierte und substituierte Arylgruppen und steht vorzugsweise für Phenyl, Tolyl, Xylyl, Mesityl, Naphthyl, Fluorenyl, Anthracenyl, Phenanthrenyl, Naphthacenyl und insbesondere für Phenyl, Tolyl, Xylyl oder Mesityl.

Substituierte Arylreste weisen vorzugsweise 1, 2, 3, 4 oder 5, insbesondere 1, 2 oder 3 Substituenten, ausgewählt unter Alkyl, Alkoxy, Carboxyl, Carboxylat, Trifluormethyl, $-SO_3H$, Sulfonat, $NE^1E^2$, Alkylen-$NE^1E^2$, Nitro, Cyano oder Halogen auf.

Hetaryl steht vorzugsweise für Pyrrolyl, Pyrazolyl, Imidazolyl, Indolyl, Carbazolyl, Pyridyl, Chinolinyl, Acridinyl, Pyridazinyl, Pyrimidinyl oder Pyrazinyl.

Im Folgenden werden Verbindungen, die sich von Acrylsäure und Methacrylsäure ableiten können teilweise verkürzt durch Einfügen der Silbe "(meth)" in die von der Acrylsäure abgeleitete Verbindung bezeichnet.

Die Begriffe "Hydrolyse" und "Alkoholyse" werden im Folgenden synonym verwendet, wobei der Fachmann weiß, dass bei Einsatz von Wasser zur Umsetzung die freie Säure und beim Einsatz von Alkoholen die entsprechenden Umesterungsprodukte erhalten werden.

Die erfindungsgemäß eingesetzten Pfropfcopolymere P1) weisen vorzugsweise ein Polyethergruppen-haltiges Rückgrat und Seitenketten mit Vinylester-Wiederholungseinheiten auf.

In den Polymeren P1) liegt das Gewichtsmengenverhältnis der Polyethergruppen zu den von Estern des Vinylalkohols und gegebenenfalls weiterer Monomeren abgeleiteten Wiederholungseinheiten bevorzugt in einem Bereich von 1:0,5 bis 1:50, besonders bevorzugt 1:1 bis 1:35, insbesondere 1:1,5 bis 1:30.

Zum Einsatz in dem erfindungsgemäßen Verfahren geeignete Pfropfcopolymere P1), die Vinylester-Wiederholungseinheiten und Polyethergruppen aufweisen und Verfahren zu ihrer Herstellung sind prinzipiell bekannt. Dazu zählen Poly(vinylester)-Polyether-Pfropfcopolymere, die beispielsweise durch radikalische Polymerisation wenigstens eines Vinylester in Gegenwart wenigstens eines Polyethers erhältlich sind. Der Begriff "Pfropfcopolymere" umfasst dabei ganz allgemein alle Produkte, die durch die radikalische Copolymerisation wenigstens eines Vinylesters sowie gegebenenfalls weiterer Monomere in Gegenwart wenigstens einer Polyetherkomponente erhältlich sind. Dieser Begriff umfasst neben reinen Pfropfpolymerisaten auch die Produkte einer nur teilweisen Pfropfung auf die Polyetherkomponente worunter z. B., Mischungen von Pfropfpolymerisaten mit ungepfropften Polyetherverbindungen, Homo- und Copolymerisate der eingesetzten Monomere sowie beliebige Mischungen verstanden werden.

Für das erfindungsgemäße Verfahren geeignete Pfropfcopolymere P1), die Vinylester-Wiederholungseinheiten und Polyethergruppen aufweisen, und Verfahren zu ihrer Herstellung sind in der DE-AS-1 007 430, WO 00/18375 und WO 03/070224 beschrieben, worauf hier in vollem Umfang Bezug genommen wird.

Zur Herstellung der Poly(vinylester)-Polyether-Pfropfcopolymere eignen sich vorzugsweise Vinylester linearer und verzweigter $C_1$-$C_{30}$-Carbonsäuren, besonders bevorzugt $C_1$-$C_{12}$-Carbonsäuren, und deren Derivate. Geeignete Vinylester sind Vinylformiat, Vinylacetat, Vinylpropionat, Vinylbutyrat, Vinylchloracetat, Vinyldichloracetat, Vinylbromacetat, Vinyltrifluoracetat, Vinylbenzoat und Mischungen davon. Besonders bevorzugt umfasst die Vinylesterkomponente Vinylacetat oder besteht daraus.

Zur Herstellung der Poly(vinylester)-Polyether-Pfropfcopolymere können weitere Comonomere eingesetzt werden. Vorzugsweise beträgt der Anteil an Comonomeren 0 bis 50 Gew.-%, besonders bevorzugt 0,01 bis 30 Gew.-%, insbesondere 1 bis 10 Gew.-%, bezogen auf das Gesamtgewicht der zur Polymerisation eingesetzten Monomere.

Geeignete Comonomere sind N-Vinyllactame und N-Vinyllactamderivate, N-Vinylamide gesättigter Monocarbonsäuren, primäre Amide α,β-ethylenisch ungesättigter Monocarbonsäuren und deren N-Alkyl- und N,N-Dialkylderivate, Ester α,β-ethylenisch ungesättigter Mono- und Dicarbonsäuren mit Diolen, Amide α,β-ethylenisch ungesättigter Mono- und Dicarbonsäuren mit Diaminen, welche mindestens eine primäre oder sekundäre Aminogruppe aufweisen, Ester und Amide α,β-ethylenisch ungesättigter Mono- und Dicarbonsäuren mit Aminoalkoholen, Ester α,β-ethylenisch ungesättigter Mono- und Dicarbonsäuren mit Alkanolen, Ester von Allylalkohol mit Monocarbonsäuren, Vinylaromaten, Vinylhalogenide, Vinylidenhalogenide, Monoolefine, nicht aromatische Kohlenwasserstoffe mit mindestens zwei konjugierten Doppelbindungen, vinyl- und allylsubstituierte Stickstoffheterocyclen, N,N-Diallylamine und N,N-Diallyl-N-alkylamine und deren Säureadditionssalze und Quaternisierungsprodukte. Geeignet als Comonomere sind auch beliebige Mischungen der zuvor genannten Monomere.

Als Comonomere geeignet sind N-Vinyllactame und N-Vinyllactamderivate, die z. B. einen oder mehrere $C_1$-$C_6$-Alkylsubstituenten, wie Methyl, Ethyl, n-Propyl, Isopropyl, n-Butyl, sec.-Butyl, tert.-Butyl, aufweisen können. Dazu zählen z. B.

N-Vinylpyrrolidon, N-Vinylpiperidon, N-Vinylcaprolactam, N-Vinyl-5-methyl-2-pyrrolidon, N-Vinyl-5-ethyl-2-pyrrolidon, N-Vinyl-6-methyl-2-piperidon, N-Vinyl-6-ethyl-2-piperidon, N-Vinyl-7-methyl-2-caprolactam, N-Vinyl-7-ethyl-2-caprolactam etc. Bevorzugt werden N-Vinylpyrrolidon und N-Vinylcaprolactam eingesetzt.

Als Comonomere geeignet sind weiterhin N-Vinylformamid, N-Vinyl-N-methylformamid, N-Vinylacetamid, N-Vinyl-N-methylacetamid, N-Vinyl-N-ethylacetamid, N-Vinylpropionamid, N-Vinyl-N-methylpropionamid, N-Vinylbutyramid, Acrylsäureamid, Methacrylsäureamid, N-Methyl(meth)acrylamid, N-Ethyl(meth)acrylamid, N-Propyl(meth)acrylamid, N-(n-Butyl)(meth)acrylamid, N-(tert.-Butyl)(meth)acrylamid, N,N-Dimethyl(meth)acrylamid, N,N-Diethyl(meth) acrylamid, Piperidinyl(meth)acrylamid, Morpholinyl(meth)acrylamid, N-[2-(Dimethylamino)ethyl]acrylamid, N-[2-(Dimethylamino)ethyl]methacrylamid, N-[3-(Dimethylamino)propyl]acrylamid, N-[3-(Dimethylamino)propyl]methacrylamid, N-[4-(Dimethylamino)butyl]acrylamid, N-[4-(Dimethylamino)butyl]methacrylamid, N-[2-(Diethylamino)ethyl]acrylamid, N-[4-(Dimethylamino)cyclohexyl]acrylamid, N-[4-(Dimethylamino)cyclohexyl]methacrylamid, N-(n-Octyl)(meth)acrylamid, N-(1,1,3,3-Tetramethylbutyl)(meth)acrylamid, N-Ethylhexyl(meth)acrylamid, N-(n-Nonyl)(meth)acrylamid, N-(n-Decyl)(meth)acrylamid, N-(n-Undecyl)(meth)acrylamid, N-Tridecyl(meth)acrylamid, N-Myristyl(meth)acrylamid, N-Pentadecyl(meth)acrylamid, N-Palmityl(meth)acrylamid, N-Heptadecyl(meth)acrylamid, N-Nonadecyl(meth)acrylamid, N-Arrachinyl(meth)acrylamid, N-Behenyl(meth)acrylamid, N-Lignoceryl(meth)acrylamid, N-Cerotinyl(meth)acrylamid, N-Melissinyl(meth)acrylamid, N-Palmitoleinyl(meth)acrylamid, N-Oleyl(meth)acrylamid, N-Linolyl(meth)acrylamid, N-Linolenyl(meth)acrylamid, N-Stearyl(meth)acrylamid und N-Lauryl(meth)acrylamid.

Als Comonomere eignen sich weiterhin Ester $\alpha,\beta$-ethylenisch ungesättigter Mono- und Dicarbonsäuren mit Diolen. Als Säurekomponente dieser Ester eignen sich z. B. Acrylsäure, Methacrylsäure, Fumarsäure, Maleinsäure, Itaconsäure, Crotonsäure, Maleinsäureanhydrid, Monobutylmaleat und Gemische davon. Bevorzugt werden als Säurekomponente Acrylsäure, Methacrylsäure und deren Gemische eingesetzt. Geeignet sind 2-Hydroxyethylacrylat, 2-Hydroxyethylmethacrylat, 2-Hydroxyethylethacrylat, 2-Hydroxypropylacrylat, 2-Hydroxypropylmethacrylat, 3-Hydroxypropylacrylat, 3-Hydroxypropylmethacrylat, 3-Hydroxybutylacrylat, 3-Hydroxybutylmethacrylat, 4-Hydroxybutylacrylat, 4-Hydroxybutylmethacrylat, 6-Hydroxyhexylacrylat, 6-Hydroxyhexylmethacrylat, 3-Hydroxy-2-ethylhexylacrylat und 3-Hydroxy-2-ethylhexylmethacrylat.

Als Comonomere eignen sich weiterhin Ester der zuvor genannten a,$\beta$-ethylenisch ungesättigten Mono- und Dicarbonsäuren mit Aminoalkoholen. Bevorzugte Aminoalkohole sind $C_2$-$C_{12}$-Aminoalkoholen, welche am Aminstickstoff $C_1$-$C_8$-dialkyliert sein können. Geeignet sind beispielsweise 2-Hydroxyethylacrylamid, 2-Hydroxyethylmethacrylamid, 2-Hydroxyethylethacrylamid, 2-Hydroxypropylacrylamid, 2-Hydroxypropylmethacrylamid, 3-Hydroxypropylacrylamid, 3-Hydroxypropylmethacrylamid, 3-Hydroxybutylacrylamid, 3-Hydroxybutylmethacrylamid, 4-Hydroxybutylacrylamid, 4-Hydroxybutylmethacrylamid, 6-Hydroxyhexylacrylamid, 6-Hydroxyhexylmethacrylamid, 3-Hydroxy-2-ethylhexylacrylamid und 3-Hydroxy-2-ethylhexylmethacrylamid.

Als Comonomere eignen sich weiterhin Amide der zuvor genannten $\alpha,\beta$-ethylenisch ungesättigten Mono- und Dicarbonsäuren mit Diaminen, welche mindestens eine primäre oder sekundäre Aminogruppe aufweisen. Bevorzugt sind Diamine, die eine tertiäre und eine primäre oder sekundäre Aminogruppe aufweisen. Geeignet sind beispielsweise N,N-Dimethylaminomethyl(meth)acrylat, N,N-Dimethylaminoethyl(meth)acrylat, N,N-Diethylaminoethyl(meth)acrylat, N,N-Dimethylaminopropyl(meth)acrylat, N,N-Diethylaminopropyl(meth)acrylat und N,N-Dimethylaminocyclohexyl(meth)acrylat.

Als Comonomere eignen sich weiterhin Ester der zuvor genannten $\alpha,\beta$-ethylenisch ungesättigten Mono- und Dicarbonsäuren mit Alkanolen, insbesondere $C_1$-$C_{12}$-Alkanolen.Geeignete zusätzliche Monomere sind dann Methyl (meth)acrylat, Methylethacrylat, Ethyl(meth)acrylat, Ethylethacrylat, n-Butyl(meth)acrylat, tert.-Butyl(meth)acrylat, tert.-Butylethacrylat, n-Octyl(meth)acrylat, 1,1,3,3-Tetramethylbutyl(meth)acrylat, Ethylhexyl(meth)acrylat, n-Nonyl(meth)acrylat, n-Decyl(meth)acrylat, n-Undecyl(meth)acrylat, Tridecyl(meth)acrylat, Myristyl(meth)acrylat, Pentadecyl(meth)acrylat, Palmityl(meth)acrylat, Heptadecyl(meth)acrylat, Nonadecyl(meth)acrylat, Arrachinyl(meth)acrylat, Behenyl (meth)acrylat, Lignoceryl(meth)acrylat, Cerotinyl(meth)acrylat, Melissinyl(meth)acrylat, Palmitoleinyl(meth)acrylat, Oleyl (meth)acrylat, Linolyl(meth)acrylat, Linolenyl(meth)acrylat, Stearyl(meth)acrylat, Lauryl(meth)acrylat und Mischungen davon.

Geeignete Comonomere sind weiterhin Ethylen, Propylen, Isobutylen, Butadien, Styrol, $\alpha$-Methylstyrol, Acryl-nitril, Methacrylnitril, Vinylchlorid, Vinylidenchlorid, Vinylfluorid, Vinylidenfluorid, Vinylimidazol, 2- und 4-Vinylpyridin, 2- und 4-Allylpyridin, N,N-Diallyl-N-methylamin und N,N-Diallyl-N,N-dimethylammonium-Verbindungen, wie z. B. die Chloride und Bromide. Dazu zählt insbesondere N,N-Diallyl-N,N-dimethylammoniumchlorid (DADMAC).

Neben den Vinylestern werden im Allgemeinen nur solche Comonomere eingesetzt, die sich unter den Bedingungen der Extrusion im Wesentlichen inert verhalten. Insbesondere weisen die von den Polyvinylester-Einheiten verschiedenen Einheiten keine funktionellen Gruppen auf, die unter den Reaktionsbedingungen mit wässrigen oder alkoholischen Lösungen von Basen reagieren.

Die zur Umsetzung mit den zuvor genannten Monomeren eingesetzte Pfropfgrundlage enthält in der Regel keine ethylenisch oder mehrfach ungesättigten C-C-Bindungen. Als Pfropfgrundlage geeignete polyetherhaltige Verbindungen sind im Allgemeinen wasserlösliche oder wasserdispergierbare, nichtionische Polymere, die Polyalkylenglycolgruppen aufweisen. Vorzugsweise beträgt der Anteil an Polyalkylenglycolgruppen mindestens 40 Gew.-%, bezogen auf das Gesamtgewicht der polyethergruppenhaltigen Verbindung. Als polyetherhaltige Verbindung können beispielsweise Polyalkylenglycole, Polyester auf Basis von Polyalkylenglycolen sowie Polyetherurethane eingesetzt werden.

Je nach Art der zu ihrer Herstellung eingesetzten Monomerbausteine enthalten die polyetherhaltigen Verbin-dungen folgende Struktureinheiten:

-$(CH_2)_2$-O- -$(CH_2)_3$-O-, -$(CH_2)_4$-O-, -$CH_2$-CH($R^1$)-O-, worin

$R^1$     für $C_1$-$C_{24}$-Alkyl, vorzugsweise $C_1$-$C_4$-Alkyl steht.

Die polethergruppenhaltigen Verbindungen können zusätzlich verbrückende Gruppen aufweisen, die beispielsweise ausgewählt sind unter:
-C(=O)-O-, -O-C(=O)-O-, -C(=O)-NR$^a$-, -O-C(=O)-NR$^a$-, -NR$^b$-(C=O)-NR$^a$-
worin $R^a$ und $R^b$ unabhängig voneinander für Wasserstoff, $C_1$-$C_{30}$-Alkyl, vorzugsweise $C_1$-$C_4$-Alkyl oder Cycloalkyl stehen.
Bevorzugt werden als Polyether Verbindungen der folgenden allgemeinen Formel mit einem Molekulargewicht > 300 verwendet

$$R^2\left\{\left(O-(CH_2)_2-O\right)_u\left(CH_2CH(CH_3)-O\right)_v\left((CH_2)_4-O\right)_w\left[A\left((CH_2)_2-O\right)_x\left(CH_2CH(CH_3)-O\right)_y\left((CH_2)_4-O\right)_z R^3\right]_s\right\}_n$$

in der die Variablen unabhängig voneinander folgende Bedeutung haben:

$R^2$     Wasserstoff, $C_1$-$G_{24}$-Alkyl, $R^4$-C(=O)-, $R^4$-NH-C(=0)-, Polyalkoholrest;

$R^3$     Wasserstoff, $C_1$-$C_{24}$-Alkyl, $R^4$-C(=O)-, $R^4$-NH-C(=O)-;

$R^4$     $C_1$-$C_{24}$-Alkyl;

A     -C(=O)-O, -C(=O)-B-C(=O)-O, -C(=O)-NH-B-NH-C(=O)-O;

B     -(CH$_2$)$_t$-, gegebenenfalls substituiertes Cycloalkylen, Heterocycloalkylen oder Arylen;

n     1 bis 200, bevorzugt 1 bis 100;

s     0 bis 1000, bevorzugt 0 bis 100;

t     2 bis 12, bevorzugt 2 bis 6;

u     1 bis 1000, bevorzugt 1 bis 500;

v     0 bis 1000, bevorzugt 1 bis 500;

w     0 bis 1000, bevorzugt 1 bis 500;

x     0 bis 1000, bevorzugt 1 bis 500;

y     0 bis 1000, bevorzugt 1 bis 500;

z     0 bis 1000, bevorzugt 1 bis 500.

Die endständigen primären Hydroxylgruppen der auf Basis von Polyalkylenoxiden hergestellten Polyether sowie die sekundären OH-Gruppen von Polyglycerin können dabei sowohl in ungeschützter Form frei vorliegen als auch mit Alkoholen einer Kettenlänge $C_1$-$C_{24}$ bzw. mit Carbonsäuren einer Kettenlänge $C_1$-$C_{24}$ verethert bzw. verestert werden oder mit Isocyanaten zu Urethanen umgesetzt werden. Bevorzugt werden Polyetherpolyole eingesetzt.

Als bevorzugte Vertreter der oben genannten Alkylreste seien verzweigte oder unverzweigte $C_1$-$C_{12}$-, besonders bevorzugt $C_1$-$C_6$-Alkylketten genannt.

Das zahlenmittlere Molekulargewicht der Polyether liegt vorzugsweise im Bereich von 300 bis 100000, besonders bevorzugt im Bereich von 500 bis 50000, ganz besonders bevorzugt im Bereich von 800 bis 40000.

Die zur Pfropfung eingesetzte Polyetherkomponente umfasst vorzugsweise wenigstens ein Polyalkylenglycol. Das zahlenmittlere Molekulargewicht der Polyalkylenglycole liegt vorzugsweise im Bereich von 300 bis 50000, besonders bevorzugt im Bereich von 400 bis 25000, ganz besonders bevorzugt im Bereich von 500 bis 10000. Bevorzugte Polyalkylenglykole sind Polyethylenglykole, Polypropylenglykole, Polytetrahydrofurane, Blockcopolymerisate aus Alkylenoxiden, besonders bevorzugt Blockcopolymere aus Ethylenoxid und Propylenoxid oder Blockcopolymerisate aus Ethylenoxid, Propylenoxid und Butylenoxid. Diese Blockcopolymere können die Alkylenoxideinheiten statistisch verteilt oder in Form von Blöcken einpolymerisiert enthalten. Geeignete Polytetrahydrofurane können durch kationische Polymerisation von Tetrahydrofuran in Gegenwart von sauren Katalysatoren, wie z. B. Schwefelsäure oder Fluoroschwefelsäure, hergestellt werden. Derartige Herstellungsverfahren sind dem Fachmann bekannt.

Vorteilhafterweise verwendet man zur Pfropfung Homo- und Copolymerisate des Ethylenoxids. Bevorzugt liegt der Ethylenoxidanteil der Copolymerisate in einem Bereich von 40 bis 99 Gew.-%.

Neben geradkettigen können auch verzweigte Polyalkylenglycole als Pfropfgrundlage verwendet werden. Verzweigte Polyalkylenglycole können hergestellt werden, indem man beispielsweise an Polyalkoholresten, z. B. an Pentaerythrit, Glycerin oder an Zuckeralkoholen wie D-Sorbit und D-Mannit aber auch an Polysaccharide wie Cellulose und Stärke, Alkylenoxide anlagert.

Geeignete kommerziell erhältliche Polyalkylenglycole sind Alkylpolyethylenglycole, wie z. B. Pluriol® A 1000 PE, Pluriol® A 1000 E (Methylpolyethylenglykol), Alkylpolypropylenglycole, wie Pluriol® A 1350 P, Polyethylenglycole, wie Pluriol® E 1000, Pluriol® E 6000 E und Pluriol® E 8000 E (alle BASF Aktiengesellschaft), etc.

Es ist aber auch möglich, Polyester von Polyalkylenoxiden und aliphatischen oder aromatischen Dicarbonsäuren, z. B. Oxalsäure, Bernsteinsäure, Adipinsäure und Terephthalsäure mit Molmassen von 1500 bis 25000, wie z. B. beschrieben in EP-A-0 743 962, als polyetherhaltige Verbindung zu verwenden. Des Weiteren können auch Polycarbonate durch Umsetzung von Polyalkylenoxiden mit Phosgen oder Carbonaten wie z. B. Diphenylcarbonat, sowie Polyurethane durch Umsetzung von Polyalkylenoxiden mit aliphatischen und aromatischen Diisocyanaten verwendet werden.

Nach einer weiteren geeigneten Ausführungsform wird zur Pfropfung eine Polyetherkomponente eingesetzt, die wenigstens ein Polyetherurethan umfasst. Geeignete Polyetherurethane sind die Kondensationsprodukte von Polyetherpolyolen, wie Polyetherdiolen, mit Polyisocyanaten, wie Diisocyanaten. Geeignete Polyetherpolyole sind die zuvor genannten Polyalkylenglykole, die beispielsweise aus der Polymerisation von cyclischen Ethern, wie Tetrahydrofuran, oder aus der Umsetzung von einem oder mehreren Alkylenoxiden mit einem Startermolekül, das zwei oder mehr aktive Wasserstoffatome aufweist, erhältlich sind. Geeignete Polyisocyanate sind ausgewählt unter Verbindungen mit 2 bis 5 Isocyanatgruppen, Isocyanatpräpolymeren mit einer mittleren Anzahl von 2 bis 5 Isocyanatgruppen, und Mischungen davon. Dazu zählen z. B. aliphatische, cycloaliphatische und aromatische Di-, Tri- und Polyisocyanate. Geeignete Diisocyanate sind z. B. Tetramethylendiisocyanat, Hexamethylendiisocyanat, 2,3,3-Trimethylhexamethylendiisocyanat, 1,4-Cyclohexylendiisocyanat, Isophorondiisocyanat, 1,4-Phenylendiisocyanat, 2,4- und 2,6-Toluylendiisocyanat und deren Isomerengemische (z. B. 80 % 2,4- und 20 % 2,6-Isomer), 1,5-Naphthylendiisocyanat, 2,4- und 4,4'-Diphenylmethandiisocyanat. Ein geeignetes Triisocyanat ist z. B. Triphenylmethan-4,4',4"-triisocyanat. Weiterhin geeignet sind Isocyanatpräpolymere und Polyisocyanate, die durch Addition der zuvor genannten Isocyanate an polyfunktionelle hydroxyl- oder amingruppenhaltige Verbindungen erhältlich sind. Weiterhin geeignet sind Polyisocyanate, die durch Biuret- oder Isocyanuratbildung entstehen. Bevorzugt werden Hexamethylendiisocyanat, trimerisiertes Hexamethytendiisocyanat, Isophorondiisocyanat, 2,4-Toluylendiisocyanat, 2,6-Toluylendiisocyanat, und Mischungen davon, eingesetzt.

Die Herstellung von in dem erfindungsgemäßen Verfahren einsetzbaren Pfropfcopolymeren, die von Vinylalkohol abgeleitete Wiederholungseinheiten und Polyethergruppen aufweisen, kann nach bekannten Verfahren erfolgen. Dazu zählen z. B. Lösungs-, Fällungs-, Suspensions- oder Emulsionspolymerisation unter Verwendung von Verbindungen, die unter den Polymerisationsbedingungen Radikale bilden. Die Polymerisationstemperaturen liegen üblicherweise in dem Bereich von 10 bis 200 °C, vorzugsweise 20 bis 110 °C. Geeignete Initiatoren sind beispielsweise Azo- und Peroxyverbindungen sowie die üblichen Redoxinitiatorsysteme, wie Kombinationen aus Wasserstoffperoxid und reduzierend wirkenden Verbindungen, z. B. Natriumsulfit, Natriumbisulfit, Natriumformaldehydsulfoxilat und Hydrazin. Diese Systeme können gegebenenfalls zusätzlich noch geringe Mengen eines Schwermetallsalzes enthalten.

Die erfindungsgemäß eingesetzten Pfropfcopolymere werden mit Wasser und/oder mindestens einem $C_1$-$C_6$-Alkanol, bevorzugt mit einem $C_1$-$C_4$-Alkanol umgesetzt. Bevorzugt sind einwertige Alkohol mit einer linearen oder verzweigten gesättigten aliphatischen Kohlenstoffkette. Als Beispiele seien genannt Methanol, Ethanol, n-Propanol, iso-Propanol, 1-Butanol, 2-Butanol, iso-Butanol, tert.-Butanol, n-Pentanol, 2-Pentanol, 3-Pentanol, 2,2-Dimethylpropanol, 2-Methyl-1-butanol, 2-Methyl-2-butanol, 3-Methyl-1-butanol, 3-Methyl-2-butanol, 1-Hexanol, 2-Hexanol, 3-Hexanol, 4-Methyl-1-pentanol, 4-Methyl-2-pentanol, 4-Methyl-3-pentanol, 2-Methyl-2-pentanol, 2-Methyl-1-pentanol, 3-Methyl-1-pentanol, 3-Methyl-2-pentanol, 3-Methyl-3-pentanol, 2-ethyl-1-butanol, 2,3-Dimethyl-1-butanol, 2,3-Dimethyl-2-butanol, 2-iso-Propyl-1-propanol, 2,2-Dimethyl-1-butanol, 3,3-Dimethyl-2-butanol und 3,3-Dimethyl-1-butanol genannt. Besonders bevorzugt sind wie Methanol, Ethanol, n-Propanol und Isopropanol, und insbesondere Methanol.

Die Umsetzung nach dem erfindungsgemäßen Verfahren erfolgt mit wässriger, wässrig/alkoholischer oder alkoholischer Lösung. Das zur Umsetzung verwendete Wasser oder die $C_1$-$C_6$-Alkanole werden zweckmäßigerweise auch als Lösungsmittel bei der Umsetzung gewählt. Erfolgt die Umsetzung mit einem $C_1$-$C_6$-Alkanol wie Methanol, so ist es insbesondere bei Verwendung von Alkali- und Erdalkalialkanolaten als Base vorteilhaft, den Gehalt an $H_2O$ auf maximal 1000 ppm und bevorzugt maximal 500 ppm zu begrenzen.

Es hat sich außerdem als vorteilhaft erwiesen, das zur Umsetzung eingesetzte $C_1$-$C_6$-Alkanol im Überschuss, z. B. von etwa 2 bis 20 Mol-%, bevorzugt etwa 5 bis 15 Mol-%, bezogen auf die in den eingesetzten Pfropfcopolymeren enthaltenen Vinylestereinheiten, einzusetzen.

Vorzugsweise verwendet man zur Umsetzung eine Lösung des Pfropfcopolymers P1), bei der der Feststoffgehalt in einem Bereich von 50 bis 95 Gew.-%, insbesondere von 60 bis 85 Gew.-% und speziell von 70 bis 80 Gew.-% liegt.

Feststoffgehalt und Viskosität werden zweckmäßigerweise so gewählt, dass eine gut förderbare (pumpbare) Lösung des Polymers P1) erhalten wird. Sie können durch Zusatz von Wasser und/oder $C_1$-$C_6$-Alkanolen auf den gewünschten Wert eingestellt werden.

Erfindungsgemäß erfolgt die Hydrolyse/Alkoholyse der Pfropfcopolymere mit Vinylester-Wiederholungseinheiten und Polyethergruppen in Gegenwart wenigstens eines Katalysators. Es ist dabei möglich, die Umsetzung in Gegenwart von wenigstens einer Säure als Katalysator durchzuführen. Saure Katalysatoren werden jedoch im Allgemeinen nur dann eingesetzt, wenn die Pfropfcopolymere funktionelle Gruppen aufweisen, die nicht ausreichend beständig gegenüber Basen sind. Geeignete Säuren sind beispielsweise Mineralsäuren wie HCl, $H_2SO_4$ oder $H_3PO_4$.

Bevorzugt wird als Katalysator wenigstens eine Base eingesetzt. Diese ist vorzugsweise ausgewählt unter Alkalihydroxiden, wie NaOH und KOH, Erdalkalihydroxiden, wie Ca(OH)$_2$, Alkali- und Erdalkali-$C_1$-$C_6$-alkanolaten, wie NaOCH$_3$, KOCH$_3$, Na(OCH$_2$CH$_3$) und Ca(OCH$_2$CH$_3$)$_2$ und Mischungen davon. Besonders bevorzugt verwendet man NaOH, KOH oder NaOCH$_3$, ganz besonders bevorzugt NaOH.

Die Menge der eingesetzten Base liegt üblicherweise im Bereich von 0,1 bis 10 Mol-%, insbesondere von 0,2 bis 5 Mol-% und speziell von 0,3 bis 3,5 Mol-%, bezogen auf die im Pfropfcopolymer P1) einpolymerisierten Vinylester-Einheiten. Durch höhere Einsatzmengen an Base kann in weiten Bereichen auch der Hydrolysegrad erhöht werden. Dabei wird jedoch auch bei sehr großen Basenüberschüssen in der Regel keine vollständige Hydrolyse (100 %) erzielt, sondern nur der in Abhängigkeit von den übrigen Reaktionsparametern (Temperatur, Druck, Schraubengeschwindigkeit, etc.) mögliche maximale Hydrolysegrad.

Die Base wird bevorzugt in Form einer wässrigen oder alkoholischen, besonders bevorzugt alkoholischen, Lösung eingesetzt. Vorteilhafterweise verwendet man als Lösungsmittel für die Base das bereits für die Hydrolyse/Alkoholyse des Polymers P1) eingesetzte Lösungsmittel.

Zur Beendigung der Umsetzung kann das Reaktionsgemisch im Extruder mit einem Neutralisationsmittel versetzt werden, d.h. bei basenkatalysierter Umsetzung mit einer Säure und vice versa. Geeignete Säuren zur Neutralisation sind die eingangs genannten Mineralsäuren. Bevorzugt sind Carbonsäuren, insbesondere Essigsäure. Geeignete Basen zur Neutralisation sind die eingangs als Katalysatoren für das erfindungsgemäße Verfahren genannten.

Für das erfindungsgemäße Verfahren eignen sich prinzipiell die üblichen, dem Fachmann bekannten Extrudertypen. Diese umfassen üblicherweise ein Gehäuse, eine Antriebseinheit, eine Plastifiziereinheit aus einer oder mehreren mit Transport- und/oder Knetelementen versehenen rotierenden Achsen (Schnecken) sowie eine Steuereinheit. Längs der Schnecke erstrecken sich in Transportrichtung mehrere Zonen, die im erfindungsgemäßen Verfahren eine Einzugszone, wenigstens eine Umsetzungszone und eine Ausstoßzone umfassen. Jede Zone kann wiederum einen oder mehrere Zylinder als kleinste unabhängige Einheit umfassen.

Geeignete Extruder sind Einschneckenextruder, Doppelschneckenextruder und Mehrwellenextruder. In einer bevorzugten Ausführung wird ein Doppelschneckenextruder eingesetzt. Mehrere Schnecken können gleichsinnig oder gegensinnig drehend, kämmend oder dicht kämmend ausgeführt und gegebenenfalls zusätzlich mit Knetscheiben und/oder rückfördernden Elementen ausgestattet sein.

Zur Entfernung von Lösungsmitteln, Hydrolyseprodukten und/oder Wasser sind die erfindungsgemäß eingesetzten Extruder vorzugsweise mit wenigstens einer Entgasungszone ausgestattet.

An die Ausstoßzone kann sich wenigstens eine Vorrichtung zur Weiterverarbeitung der Extrudate, wie z. B. eine Spritzgießmaschine, Blasformanlage oder Zerkleinerungsanlage anschließen. Zur Herstellung von Granulaten kann beispielsweise ein üblicher Schneidgranulator eingesetzt werden.

Bevorzugt werden für das erfindungsgemäße Verfahren Doppelschneckenextruder, insbesondere Extruder der ZSK-Baureihe der Firma Werner & Pfleiderer, z. B. das Modell ZSK30, eingesetzt. Es können jedoch auch andere herkömmliche Extruder, die die Verfahrensanforderungen der vorliegenden Erfindung in analoger Weise erfüllen, eingesetzt werden. Der mit Reaktivextrusionen befasste Fachmann kann die spezielle Anpassung der Extruderauslegung, wie hier beschrieben, auf andere Extrudermodelle und -typen in Routineversuchen ermitteln.

Die Verwendung eines Doppelschneckenextruders mit Schnecken in paralleler Anordnung ist bevorzugt.

Zur Durchführung des erfindungsgemäßen Verfahrens ist es besonders vorteilhaft, einen Extruder zu verwenden, der wenigstens teilweise, bevorzugt vollständig mit einem unter den Reaktionsbedingungen inerten Material, speziell einem basenbeständigen Material wie fluorierten Polyalkylenen ausgekleidet ist oder dessen Oberfläche aus entsprechenden Stahlqualitäten besteht.

In einer speziellen Ausführung des erfindungsgemäßen Verfahrens wird ein Doppelschneckenextruder mit 10 bis 18, insbesondere 12 bis 15 und speziell 13 Zylindern und Ausstoßdüse verwendet. Zur technischen Realisation der nachfolgenden Ausführungen eignet sich beispielsweise ein ZSK30-Doppelschnecken-Extruders mit 13 Zylindern und Ausstoßdüse. Der mit Extrusion befasste Fachmann erkennt jedoch, dass eine Vielzahl ergänzender, modifizierender oder äquivalenter Ausführungsmöglichkeiten des beschriebenen Extruders zur Durchführung des erfindungsgemäßen Verfahrens sowohl bezüglich eines ZSK30-Doppelschnecken-Extruders als auch bezüglich anderer herkömmlicher Extruder bestehen. So kann z. B. die Gesamtlänge des Extruders oder die Länge einzelner Zonen, insbesondere die Länge der Reaktionszone durch Verwendung einer geänderten oder angepassten Anzahl Zylinder, variiert werden.

Das erfindungsgemäße Verfahren wird üblicherweise so durchgeführt, dass der Extruder in einer ersten Einzugszone mit der wässrigen oder alkoholischen Lösung der eingesetzten Pfropfcopolymere P1) und in einer zweiten Einzugszone mit der wässrigen und/oder alkoholischen Lösung der eingesetzten Base beschickt wird. Natürlich kann diese Zuführung auch in einer gemeinsamen ersten Einzugszone erfolgen. Des Weiteren kann eine bereits vorgemischte Lösung, die das Polymer P1) und die Base enthält zum Beschicken des Extruders eingesetzt werden. Die Umsetzung der Estergruppen mit Wasser oder dem $C_1$-$C_6$-Alkanol erfolgt in der anschließenden Reaktionszone des Extruders. Dabei werden bei der Alkoholyse $C_1$-$C_6$-Alkylmonocarbonsäureester und bei der Hydrolyse Monocarbonsäuren vom Pfropfcopolymer P1) abgespalten. Diese Spaltprodukte können in der Regel zusammen mit dem Lösungsmittel in der oder den Entgasungszone(n) entfernt werden. Dies kann durch eine vor- oder zwischengeschaltete Zufuhr von Wasser, durch die die während der Umsetzung ausgebildete Polymer- bzw. Gelphase teilweise oder vollständig gelöst wird, unterstützt werden. Im Anschluss an die Reaktionszone des Extruders, d. h. am Extruderkopf bzw. an der Austrittsöffnung, kann das Polymerprodukt P2) dann entnommen oder in weitere Werkzeuge zur weiteren Verarbeitung, z. B. zur Neutralisation der eingesetzten Base und/oder zur Formgebung, überführt werden.

Der im erfindungsgemäßen Verfahren verwendete Extruder weist vorteilhafterweise mindestens die folgenden sukzessiv angeordneten Zonen auf:

1. Zone:   Einzugszone für die Zufuhr der eingesetzten Pfropfcopolymere P1);
2. Zone:   Einzugszone für die Base;
3. Zone:   Reaktionszone;
4. Zone:   Mischzone, gegebenenfalls mit Wasserzulauf;
5. Zone:   Entgasungszone mit einem oder mehreren Zylindern zur Entgasung bei Atmosphärendruck und/oder unter Vakuum;
6. Zone:   Ausstoßzone (z. B. in Form einer Ausstoßdüse, -blende oder sonstigen Austrittsöffnung, bevorzugt in Form einer Ausstoßdüse).

Darüber hinaus können eine oder mehrere weitere Zonen, wie z. B. Mischzonen, Aufheiz/Abkühlzonen, Entgasungszonen, Einzugszonen für Neutralisationsmittel und/oder Meteringzonen vorgesehen sein.

Die 1. Zone ist die Einzugszone für die Zufuhr der eingesetzten Pfropfcopolymere P1) und umfasst in der Regel 1 bis 3, vorzugsweise 2 bis 3 Zylinder. Diese Zone muss zwischen Schnecke und Gehäuse so gegenüber der Antriebsvorrichtung versiegelt werden, dass die Edukte nicht rückwärtig aus der Maschine austreten können.

In dieser 1. Zone ist die verwendete Schnecke vorzugsweise eingängig, um einen genügenden Druckaufbau gegenüber dem heißen Reaktionsprodukt zu gewährleisten. Dies kann durch die Verwendung von Förderelementen in diesem Bereich der Schnecke unterstützt werden.

Der erste Zylinder in Stromrichtung ist in der Regel geschlossen. In der Regel befindet sich am ersten oder zweiten, insbesondere zweiten Zylinder die Zufuhrvorrichtung zur Beschickung des Extruders mit den eingesetzten Pfropfcopolymeren P1). Diese werden beispielsweise über eine Dosierpumpe zugeführt.

Es hat sich als vorteilhaft erwiesen, alle Zylinder der ersten Einzugszone (1. Zone) bis einschließlich des mit der Zufuhrvorrichtung ausgestatteten Zylinders bei einer Temperatur von Umgebungstemperatur oder darunter zu halten. Ein geeigneter Temperaturbereich ist z. B. 10 bis 20 °C, beispielsweise 16 bis 18 °C. Dazu können diese Zylinder leicht gekühlt werden, z. B. mit kaltem Wasser. Der an den mit der Zufuhrvorrichtung für die Polymerlösung ausgestatteten Zylinder sich stromabwärts anschließende Zylinder, d. h. beispielsweise der zur ersten Einzugszone (1. Zone) oder der zur zweiten Einzugszone für die Base (2. Zone) gehörende dritte Zylinder in Stromrichtung wird vorteilhafterweise auf eine Temperatur im Bereich von 50 bis 70 °C, insbesondere von 55 bis 65 °C und speziell von etwa 60 °C erhitzt.

Die 2. Zone ist die Einzugszone für die Base und umfasst in der Regel einen Zylinder mit einer Zufuhrvorrichtung zur Beschickung des Extruders mit einer wässrigen oder alkoholischen Lösung der Base. Die Schnecke kann in dieser Zone zur Gewährleistung einer guten Vermischung der Komponenten mit Mischelementen, z. B. rückvermischenden Elementen, ausgestattet sein.

Die Lösung der Base kann mit einer Pumpe, beispielsweise einer Dosier-Kolbenpumpe, zugeführt werden. Diese Zuführung kann beispielsweise über einen nach außen abgeschlossenen Zufuhrstutzen unter Druck erfolgen. Gegebenenfalls kann die Lösung der Base vor der Zufuhr vorgewärmt werden, beispielsweise auf eine Temperatur im Bereich von 30 bis 80 °C.

Die 3. Zone ist die eigentliche Reaktionszone und umfasst in der Regel mehrere, z. B. 2 bis 10, bevorzugt 3 bis 8 und besonders bevorzugt 6 bis 7 geschlossene Zylinder. Die Schnecke ist in diesem Bereich vorteilhafterweise so ausgelegt, dass Förderelemente mit Knetblöcken alternieren.

Diese 3. Zone wird vollständig oder teilweise, bevorzugt vollständig auf eine Temperatur von 60 bis 130 °C, bevorzugt 70 bis 110 °C, besonders bevorzugt 80 bis 100 °C erhitzt.

Zwischen der 3. und der 4. Zone kann gegebenenfalls eine erste Entgasungszone mit ein oder mehreren, beispielsweise 1 oder 2, Devolatilisierungs-Zylindern integriert werden. Über eine oder mehrere bei Atmosphärendruck oder Unterdruck betriebene Entgasungsvorrichtung(en) kann hier bereits ein Teil der flüchtigen Bestandteile, wie Lösungsmittel und/oder Spaltprodukte entfernt werden. Der auf diese Weise entnommene Gasstrom kann z. B. über eine mit dem Extruder verbundene Kondensationseinheit kondensiert und, sofern gewünscht, weiteren Verarbeitungs- oder Aufarbeitungsschritten, wie der Trennung der Komponenten in Destillationskolonnen, zugeführt werden.

Im Bereich der Entgasungszone ist die Schnecke vorteilhafterweise sowohl mit Förderelementen als auch mit Knetelementen ausgestattet.

Bei der 4. Zone handelt es sich um eine kurze Mischzone, die gegebenenfalls einen Wasserzulauf aufweist, über den Wasser mit einer Dosier-Kolbenpumpe zugeführt werden kann. Diese Zone besteht in der Regel aus einem Zylinder. Die Schnecke ist in diesem Bereich mit Förderelementen und gegebenenfalls mit rückvermischenden Elementen ausgestattet.

Die 5. Zone ist eine Entgasungszone mit einem oder mehreren, beispielsweise ein oder zwei, Zylindern zur Entgasung bei Atmosphärendruck und/oder unter Vakuum. Es hat sich als vorteilhaft erwiesen, die Entgasungszone so auszulegen, dass sie einen Zylinder mit Entgasungsstutzen zur Entgasung bei Atmosphärendruck, gefolgt von einem geschlossenen Zylinder, und einen mit Entgasungsstutzen zur Entgasung unter Vakuum ausgestatteten Zylinder umfasst.

Die Schnecke wird dabei vorteilhafterweise so ausgelegt, dass sie im Bereich der mit den Entgasungsstutzen ausgestatteten Zylinder Förderelemente und dazwischen, insbesondere im Bereich des geschlossenen Zylinders, Knetblöcke aufweist.

In dieser Entgasungszone können die noch vorhandenen flüchtigen Bestandteile wie Lösungsmittel, Spaltprodukte sowie gegebenenfalls zugegebenes Wasser mit darin enthaltenen Verunreinigungen im Wesentlichen entfernt werden. Der auf diese Weise entnommene Gasstrom kann z. B. über eine mit dem Extruder verbundene Kondensationseinheit kondensiert und, sofern gewünscht, weiteren Verarbeitungs- oder Aufarbeitungsschritten, wie der Trennung der Komponenten in Destillationskolonnen, zugeführt werden.

Die Temperaturen in der Mischzone (4. Zone) und/oder Entgasungszone (5. Zone) werden vorteilhafterweise auf 130 °C oder weniger, bevorzugt 110 °C oder weniger, besonders bevorzugt 100 °C oder weniger und ganz besonders bevorzugt etwa 90 °C eingestellt. Üblicherweise wird die Temperatur hier so gewählt, dass sie mit der in der Reaktionszone eingestellten Temperatur übereinstimmt.

An die Entgasungszone schließt sich zum distalen Extruderende hin die Ausstoßzone an (6. Zone). Diese umfasst in einer geeigneten Ausführung eine Meteringzone (Homogenisierungszone) vor der eigentlichen Ausstoßvorrichtung. In dieser Meteringzone kann die Homogenisierungswirkung der Schnecken durch entsprechend ausgebildete Mischelemente verstärkt werden. Zusätzlich kann die Zwangsförderung unterbrochen werden, um einen intensiveren Materialaustausch zu erzwingen. Die eigentliche Ausstoßvorrichtung besteht im Wesentlichen aus dem Extruderkopf bzw. der angeschlossenen Ausstoßdüse, -blende oder sonstigen Austrittsöffnung, z. B. einer Runddüse, Breitschlitzdüse oder Lochblende. Die Temperatur in der Ausstoßzone (einschließlich einer etwaig vorhandenen Meteringzone und der Austrittsöffnung), beträgt vorzugsweise mehr als 150 °C, besonders bevorzugt mehr als 155 °C und insbesondere etwa 160 °C.

Die Einhaltung des beschriebenen Temperaturprofils in den verschiedenen Extruderzonen ist unter anderem deshalb wichtig, weil dadurch die Konversionsrate der Vinylester zu Vinylalkohol beeinflusst wird. Es wurde gefunden, dass man im Allgemeinen eine umso geringere Konversionsrate erhält, je höher die Reaktionstemperatur gewählt wird. Außerdem kann eine höhere Reaktionstemperatur eine meist unerwünschte Dunkelfärbung des Reaktionsprodukts zur Folge haben, so dass diese zweckmäßigerweise auf die zuvor beschriebenen Höchstwerte begrenzt wird. Zudem hat es sich als vorteilhaft erwiesen, die Temperatur in der Ausstoßzone nicht zu gering zu wählen, da der Extruderkopf anderenfalls zur Verblockung neigt.

Zur Durchführung des erfindungsgemäßen Verfahrens werden die Schnecken des Extruders vorzugsweise mit einer Rotationsgeschwindigkeit im Bereich von 100 bis 1500 Upm, bevorzugt von 250 bis 1000 Upm betrieben. Allgemein lassen sich höhere Hydrolysegrade durch höhere Rotationsgeschwindigkeiten erreichen.

Die Verweilzeit der Reaktionsmischung im Extruder beträgt vorzugsweise weniger als 30 min, besonders bevorzugt weniger als 10 min und liegt insbesondere im Bereich von 0,5 bis 5 min und speziell von etwa 1 bis 2 min. Die Verweilzeit hängt unter anderem vom Füllgrad ab, mit dem der Extruder betrieben wird. Eine längere Verweilzeit im Extruder führt in der Regel zu einer Erhöhung des erzielten Hydrolysegrades.

Durch das erfindungsgemäße Verfahren ist es in der Regel möglich, einen Hydrolysegrad im Bereich von 80 bis 98 %, bevorzugt von 84 bis 94 Mol-% bezogen auf die im eingesetzten Pfropfcopolymer einpolymerisierten Vinylestereinheiten zu erzielen.

Sofern eine Neutralisation nicht bereits im Extruder erfolgt ist, können die erhaltenen Pfropfcopolymere P2) vor einer sich gegebenenfalls anschließenden Weiterverarbeitung neutralisiert werden. Dazu können die Pfropfcopolymere beispielsweise in einen geeigneten Behälter, der eine Temperaturkontrolle gestattet, z. B. einen mit Rührer und Kühlvorrichtung ausgestatteten Kessel, Reaktor oder Tank, zur Neutralisation des basischen oder sauren Katalysators überführt werden. Vorteilhafterweise erfolgt die Neutralisation in einem organischen Lösungsmittel, in dem das erhaltene Blockcopolymer nicht oder nur gering löslich ist, so dass eine anschließende Abtrennung der Pfropfcopolymere von der flüssigen Phase, z. B. durch Filtration, vereinfacht wird. Geeignete Lösungsmittel sind in diesem Zusammenhang z. B. Alkohole, wie Methanol, Ester organischer Carbonsäuren, wie Methylacetat und Ethylacetat, und Mischungen davon. Die organische Lösungsmittel können gegebenenfalls in Kombination mit einer geringen Menge Wasser, z. B. 2 Gew.-%, bezogen auf das Gesamtgewicht des Lösungsmittelgemischs eingesetzt werden. Der Neutralisationsschritt erfolgt üblicherweise bei einer Temperatur des verwendeten Lösungsmittelgemischs, so dass die erhaltenen Pfropfcopolymere dabei erstarren. Bevorzugt führt man die am Extruderkopf erhaltenen Blockcopolymere ohne Neutralisationsschritt einer Weiterverarbeitung oder weiteren Verwendung zu.

Die am Extruderkopf bzw. an der Austrittsöffnung erhaltenen Vinylalkohol in einpolymerisierter Form enthaltenden Blockcopolymere werden in der Regel in Form eines kontinuierlichen Strangextrudats mit vorzugsweise konstantem Querschnitt, z. B. in Form eines Bandes oder Stranges, insbesondere mit rundem, ovalem, abgerundetem oder flachem und breitem Querschnitt, erhalten und können entnommen und vor oder nach dem Erstarren weiter verarbeitet werden. Vorteilhafterweise erfolgt vor dem vollständigen Erstarren mindestens ein an die Austrittsöffnung des Extruders anschließender Formungsschritt. Nach dem Erstarren können die erhaltenen Blockcopolymere gegebenenfalls zwischengelagert und zur weiteren Verarbeitung, insbesondere zur weiteren Formgebung, in eine Vielzahl von Werkzeugen, insbesondere zum Spritzgießen oder zur Folienextrusion, überführt werden. Alternativ können sie zu diesem Zweck auch vor dem vollständigen Erstarren in ein solches Werkzeug überführt, z. B. direkt extrudiert werden.

Die Formung vor dem Erstarren kann in Abhängigkeit von der Viskosität des erhaltenen Block-Copolymer-Extrudats z. B. durch Formgießen, Spritzgießen, Folienextrusion, Pressen, Quetschen oder Kalandrieren erfolgen. Die durch das erfindungsgemäße Verfahren erhaltenen Blockcopolymere können so z. B. in granulärer Form oder direkt als Folie erhalten werden. Vorzugsweise verwendet man das erfindungsgemäße Verfahren zur Herstellung von Granulaten der durch Extrusion erhaltenen Blockcopolymere.

Geeignete, an die ihrerseits selbst formgebende Austrittsöffnung des Extruders anschließende Formungsschritte für Extrudate sind insbesondere der Kaltabschlag, der Heißabschlag und das Abquetschen des zumindest noch nicht vollständig erstarrten Strangs in einer Quetschvorrichtung, wobei es sich um übliche, dem Fachmann bekannte Verfahren handelt. Kaltabschlag bedeutet das Schneiden oder Zerhacken des Strangs nach zumindest teilweisem Erstarren, Heißabschlag das Zerschneiden oder Zerhacken des Strangs vor dessen Erstarren. Mit Heiß- oder Kaltabschlag lassen sich insbesondere Granulate (Heiß- oder Kaltgranulierung) und Pellets herstellen.

Die Pfropfcopolymere P2), die durch das erfindungsgemäße Verfahren erhalten werden, insbesondere die Granulate davon, eignen sich besonders vorteilhaft zur Verwendung als Einsatzmaterial in Spritzguss- oder Folienextrusions-Verfahren, ganz besonders zur Herstellung wasserlöslicher Überzüge und Verpackungsmaterialien wie Folien. Insbesondere zeichnen sich die Granulate nach dem erfindungsgemäßen Verfahren hergestellter Blockcopolymere dadurch aus, dass sie sich auf einfache und einheitliche Weise dem jeweils verwendeten Werkzeug, z. B. einer üblichen Spritzgussmaschine oder Folienextrusionsanlage, zuführen lassen.

Das erfindungsgemäße Verfahren ist insbesondere zum kontinuierlichen Betrieb geeignet.

Durch das nachfolgende Beispiel wird die Erfindung veranschaulicht, ohne dass der Umfang des Erfindungsgegenstandes in irgendeiner Hinsicht eingeschränkt werden soll.

Beispiele

I. Auslegung des Extruders

Es wurde ein ZSK30-Doppelschnecken-Extruders der Firma Werner & Pfleiderer, Stuttgart, Deutschland, mit 13 Zylindern und Ausstoßdüse eingesetzt. Dieser wies die folgenden Zonen auf:

| 1. Zone | Einzugszone mit Zufuhrstutzen für Lösung der eingesetzten Pfropfcopolymere |
|---------|---------------------------------------------------------------------------|
| 2. Zone | Einzugszone mit Zufuhrstutzen für die Base |
| 3. Zone | Reaktionszone |
|         | (1.) Entgasungszone mit Entgasungsstutzen für Entgasung bei Atmosphärendruck |
| 4. Zone | Mischzone mit Wasserzulauf |
| 5. Zone | (2.) Entgasungszone mit Entgasungsstutzen für zweistufige Entgasung bei Atmosphärendruck und unter Vakuum |
| 6. Zone | Meteringzone und Ausstoßdüse |

II. Herstellung eines Polyethylenglykol-Polyvinylacetat-Pfropfcopolymers

Ein Polyethylenglykol-Polyvinylacetat-Pfropfcopolymer (PEG-g-PVAc-Copolymer) wurde wie in Beispiel 1 der WO 00/18375 beschrieben, durch Pfropfcopolymerisation von 410 g Vinylacetat auf 72 g Polyethylenglykol (zahlenmittleres Molekulargewicht 6000, Pluriol® E 6000, BASF Aktiengesellschaft) hergestellt. Das Verhältnis von Polyethylenglykol zu Vinylacetat betrug 15:85. Durch Verdünnung mit Methanol wurde eine Polymerlösung hergestellt, die eine Viskosität von 36200 mPas bei einem Feststoffgehalt von 76,6 Gew.-% aufwies.

III. Methanolyse des PEG-g-PVAc-Copolymers

Die wie unter 11. beschrieben hergestellte methanolische Polymerlösung wurde dem unter 1. beschriebenen Extruder über den Einzugsstutzen der ersten Einzugszone bei Umgebungstemperatur mit Hilfe einer Dosierpumpe zugeführt. Über die zweite Einzugszone wurde eine methanolische NaOH-Lösung kontinuierlich so zudosiert, dass eine Einsatzmenge 1,8 Mol-%, bezogen auf die im eingesetzten Pfropfcopolymer enthaltenen Vinylacetat-Gruppen erzielt wird. Die aus dem mit Einzugsstutzen für die Base versehenen Zylinder bestehende zweite Einzugszone (2. Zone) wurde auf 60 °C temperiert. Die Zylinder 4 bis 13 (3. bis 5. Zone) wurden auf eine Temperatur von 90 °C erhitzt, die Austoßzone auf eine Temperatur von 160°C. Die Rotationsgeschwindigkeit der Schnecken betrug 550 Upm.
Es wurde ein PEG-g-PVA-Copolymer mit einem Hydrolysegrad von 88,9 %, einem zahlenmittleren Molekulargewicht Mn von 9300, einem gewichtsmittleren Molekulargewicht Mw von 21900 und einer Uneinheitlichkeit Mw/Mn von 2,4 erhalten.

**Patentansprüche**

1.  Verfahren zur Herstellung von Pfropfcopolymeren P2), die von Vinylalkohol abgeleitete Wiederholungseinheiten und Polyethergruppen aufweisen, durch Umsetzung von Pfropfcopolymeren P1), die von Estern des Vinylalkohols abgeleitete Wiederholungseinheiten und Polyethergruppen aufweisen, mit Wasser und/oder mindestens einem $C_1$-$C_6$-Alkanol in Gegenwart eines Katalysators, wobei die Umsetzung in einem Extruder erfolg.

2.  Verfahren nach Anspruch 1, bei dem man zur Umsetzung ein Pfropfcopolymer P1) einsetzt, das durch Polymerisation wenigstens eines Esters des Vinylalkohols mit einer Monocarbonsäure und gegebenenfalls wenigstens eines weiteren $\alpha,\beta$-ethylenisch ungesättigten Monomers in Gegenwart wenigstens eines Polyethers erhältlich ist.

3.  Verfahren nach Anspruch 2, wobei in den Polymeren P1) das Gewichtsmengenverhältnis der Polyethergruppen zu den von Estern des Vinylalkohols und gegebenenfalls weiteren Monomeren abgeleiteten Wiederholungseinheiten in einem Bereich von 1:0,5 bis 1:50 liegt.

4.  Verfahren nach einem der vorhergehenden Ansprüche, bei dem als Pfropfcopolymer P1) wenigstens ein Polyethylenglycol-Polyvinylacetat-Pfropfcopolymer eingesetzt wird.

5.  Verfahren nach einem der vorhergehenden vorherigen Ansprüche, bei dem wenigstens ein $C_1$-$C_6$-Alkanol in einem Überschuss von 2 bis 20 Mol-%, bevorzugt 5 bis 15 Mol-%, bezogen auf die in den eingesetzten Pfropfcopolymeren P1) enthaltenen Vinylestereinheiten, eingesetzt wird.

**6.** Verfahren nach einem der vorhergehenden vorherigen Ansprüche, bei dem zur Umsetzung eine Lösung des Pfropfcopolymers P1) mit einem Feststoffgehalt in einem Bereich von 50 bis 95 Gew.-% eingesetzt wird.

**7.** Verfahren nach einem der vorhergehenden Ansprüche, wobei der eingesetzte Extruder die folgenden sukzessiv angeordneten Zonen aufweist:

1. Zone: Einzugszone für die Zufuhr der eingesetzten Pfropfcopolymere P1);
2. Zone: Einzugszone für die Base;
3. Zone: Reaktionszone;
4. Zone: Mischzone, gegebenenfalls mit Wasserzulauf;
5. Zone: Entgasungszone;
6. Zone: Ausstoßzone.

**8.** Verfahren nach Anspruch 7, wobei die Ausstoßzone eine Temperatur von mehr als 150 °C und die Reaktionszone eine Temperatur von höchstens 130 °C aufweist.

**9.** Verfahren nach einem der vorhergehenden Ansprüche, wobei ein Doppelschneckenextruder mit Schnecken in paralleler Anordnung eingesetzt wird.

**10.** Verfahren nach einem der vorhergehenden Ansprüche, wobei der Extruder mit einer Rotationsgeschwindigkeit der Schnecken im Bereich von 100 bis 1500 Upm betrieben wird.

**11.** Verfahren nach einem der vorhergehenden Ansprüche, wobei ein Extruder eingesetzt wird, der wenigstens teilweise mit einem unter den Reaktionsbedingungen inerten Material ausgekleidet ist.

**12.** Verfahren nach einem der vorhergehenden Ansprüche, bei dem ein Hydrolysegrad im Bereich von 80 bis 98 %, bezogen auf die im eingesetzten Pfropfcopolymer einpolymerisierten Vinylestereinheiten erzielt wird.

**13.** Verfahren nach einem der vorhergehenden Ansprüche, wobei die von Vinylalkohol abgeleitete Wiederholungseinheiten und Polyethergruppen aufweisenden Pfropfcopolymere P2) einer Weiterverarbeitung zu einem Granulat oder einer Folie unterzogen werden.

**Claims**

**1.** A process for preparation of graft copolymers P2) which have repeat units derived from vinyl alcohol and have polyether groups, via reaction of graft copolymers P1) which have repeat units derived from esters of vinyl alcohol and have polyether groups, with water and/or with at least one $C_1$-$C_6$ alkanol in the presence of a catalyst, where the reaction takes place in an extruder.

**2.** The process according to claim 1, where the reaction uses a graft copolymer P1) which is obtainable via polymerization of at least one ester of vinyl alcohol with a monocarboxylic acid and, if desired, of at least one other $\alpha,\beta$-ethylenically unsaturated monomer in the presence of at least one polyether.

**3.** The process according to claim 2, where, in the polymers P1), the quantitative ratio by weight of the polyether groups with respect to the repeat units derived from esters of vinyl alcohol and, if desired, from other monomers is in the range from 1:0.5 to 1:50.

**4.** The process according to any of the preceding claims, which uses, as graft copolymer P1), at least one polyethylene glycol-polyvinyl acetate graft copolymer.

**5.** The process according to any of the preceding claims, which uses at least one $C_1$-$C_6$ alkanol in an excess of from 2 to 20 mol%, preferably from 5 to 15 mol%, based on the vinyl ester units present in the graft copolymers P1) used.

**6.** The process according to any of the preceding claims, which uses, for the reaction, a solution of the graft copolymer P1) with solids content in the range from 50 to 95% by weight.

**7.** The process according to any of the preceding claims, where the extruder used has the following zones arranged in succession:

1st zone: feed zone for introduction of graft copolymers P1) used;
2nd zone: feed zone for the base;
3rd zone: reaction zone;
4th zone: mixing zone, if desired with water inlet;
5th zone: vent zone;
6th zone: output zone.

8. The process according to claim 7, where the output zone has a temperature of more than 150°C and the reaction zone has a temperature of at most 130°C.

9. The process according to any of the preceding claims, which uses a twin-screw extruder with parallel screws.

10. The process according to any of the preceding claims, where the extruder is operated with a rotation rate of the screws in the range from 100 to 1500 rpm.

11. The process according to any of the preceding claims, which uses an extruder which, at least to some extent, has been lined with a material which is inert under the reaction conditions.

12. The process according to any of the preceding claims, which achieves a degree of hydrolysis in the range from 80 to 98%, based on the vinyl ester units copolymerized in the graft copolymer used.

13. The process according to any of the preceding claims, where the graft copolymers P2) having repeat units derived from vinyl alcohol and having polyether groups are subjected to further processing to give granules or to give a foil.

**Revendications**

1. Procédé de fabrication de copolymères greffés P2), qui comportent des unités de répétition dérivées d'alcool vinylique et des groupes polyéther, par mise en réaction de copolymères greffés P1), qui comportent des unités de répétition dérivées d'esters de l'alcool vinylique et des groupes polyéther, avec de l'eau et/ou au moins un alcanol en $C_1$-$C_6$ en présence d'un catalyseur, la réaction ayant lieu dans une extrudeuse.

2. Procédé selon la revendication 1, dans lequel un copolymère greffé P1), qui peut être obtenu par polymérisation d'au moins un ester de l'alcool vinylique avec un acide monocarboxylique et éventuellement au moins un autre monomère α, β-éthyléniquement insaturé en présence d'au moins un polyéther, est utilisé pour la réaction.

3. Procédé selon la revendication 2, dans lequel le rapport en poids entre les groupes polyéther et les unités de répétition dérivées d'esters de l'alcool vinylique et éventuellement d'autres monomères dans les polymères P1) se situe dans une plage allant de 1:0,5 à 1:50.

4. Procédé selon l'une quelconque des revendications précédentes, dans lequel au moins un copolymère greffé polyéthylène glycol-polyacétate de vinyle est utilisé en tant que copolymère greffé P1).

5. Procédé selon l'une quelconque des revendications précédentes, dans lequel au moins un alcanol en $C_1$-$C_6$ est utilisé en un excès de 2 à 20 % en moles, de préférence de 5 à 15 % en moles, par rapport aux unités ester vinylique contenues dans les copolymères greffés P1) utilisés.

6. Procédé selon l'une quelconque des revendications précédentes, dans lequel une solution du copolymère greffé P1) ayant une teneur en solides dans une plage allant de 50 à 95 % en poids est utilisée pour la réaction.

7. Procédé selon l'une quelconque des revendications précédentes, dans lequel l'extrudeuse utilisée présente les zones suivantes agencées successivement :

zone 1 : zone d'entrée pour l'alimentation des copolymères greffés P1) utilisés ;
zone 2 : zone d'entrée pour la base ;
zone 3 : zone de réaction ;

zone 4 : zone de mélange, éventuellement avec alimentation d'eau ;
zone 5 : zone de dégazage ;
zone 6 : zone de déchargement.

**8.** Procédé selon la revendication 7, dans lequel la zone de déchargement présente une température supérieure à 150 °C et la zone de réaction une température d'au plus 130 °C.

**9.** Procédé selon l'une quelconque des revendications précédentes, dans lequel une extrudeuse bivis munie de vis en agencement parallèle est utilisée.

**10.** Procédé selon l'une quelconque des revendications précédentes, dans lequel l'extrudeuse est exploitée avec une vitesse de rotation des vis dans la plage allant de 100 à 1 500 tours/minute.

**11.** Procédé selon l'une quelconque des revendications précédentes, dans lequel une extrudeuse qui est revêtue au moins partiellement avec un matériau inerte dans les conditions de réaction est utilisée.

**12.** Procédé selon l'une quelconque des revendications précédentes, dans lequel un degré d'hydrolyse dans la plage allant de 80 à 98 %, par rapport aux unités ester vinylique incorporées par polymérisation dans le copolymère greffé utilisé, est atteint.

**13.** Procédé selon l'une quelconque des revendications précédentes, dans lequel les copolymères greffés P2) qui comportent des unités de répétition dérivées d'alcool vinylique et des groupes polyéther sont soumis à un traitement supplémentaire pour former un granulat ou un film.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 03070224 A
- DE 1081229 B
- DE 1094457 B
- WO 0018375 A
- WO 9502616 A
- US 3072624 A
- GB 848787 A
- US 5599877 A
- EP 0054716 A
- DE 1007430 B
- EP 0743962 A